# EUROPEAN PATENT APPLICATION

(11) **EP 4 597 467 A1**
(43) Date of publication of application: **06.08.2025**
(21) Application number: 22960902.9
(22) Date of filing: 29.09.2022
(51) Int. Cl.: G08G 1/00, B60W 60/00, G08G 1/09

(54) **INFORMATION PROCESSING DEVICE, DRIVING ASSISTANCE SYSTEM, AND INFORMATION PROCESSING METHOD**

(71) Applicant: Hitachi Astemo, Ltd., Ibaraki 312-8503 (JP)
(72) Inventor: JIRALERSPONG Trongmun, Tokyo 100-8280 (JP); NISHIDA Takehisa, Tokyo 100-8280 (JP)
(74) Representative: MERH-IP Matias Erny Reichl Hoffmann Patentanwälte PartG mbB
(86) International application number: PCT/JP2022/036417
(87) International publication number: WO 2024/069842

(57) **Abstract**

To provide an information processing device, a driving assistance system, and an information processing method capable of extracting driving experience information from driving data of a vehicle, distributing the driving experience information extracted in accordance with a traveling environment and a traveling condition of the vehicle, and providing driving assistance with high comfort and high availability. A server 1 updates a validity evaluation of the driving experience information based on a result of evaluating whether the driving experience information distributed to the vehicle has been executed or whether execution thereof is necessary.

## Description

### Technical Field

The present invention relates to, for example, an information processing device, a driving assistance system, and an information processing method for assisting automated driving control of an automated driving vehicle.

### Background Art

The market for automated driving is becoming larger and larger, and in order to achieve, for example, automated driving of level 3 or higher, the sophistication of a system is essential.

PTL 1 discloses an automated driving assistance device and a method thereof for calculating a route (such as avoidance if a right turn is difficult) adapted to each function of an automated driving vehicle using a function achievement value (success/failure count) indicating an achievement level of each of a plurality of functions during automated driving of the automated driving vehicle.

### Citation List

### Patent Literature

PTL 1: JP 2020-008411 A

### Summary of Invention

### Technical Problem

In the above manner, an automated driving system extracts driving experience information from driving data of a vehicle and distributes the extracted driving experience information to the vehicle as described above. In a case where an actual state is different from the driving experience information extracted from the driving data, inappropriate driving experience information is continuously distributed to the vehicle, which may lead to traffic congestion or an accident, and further gives incongruity and discomfort to a passenger.

The present invention has been made in view of the above point, and an object of the present invention is to provide an information processing device, a driving assistance system, and an information processing method capable of extracting driving experience information from driving data of a vehicle, distributing the driving experience information extracted in accordance with a traveling environment and a traveling condition of the vehicle, and providing driving assistance with high comfort and high availability.

### Solution to Problem

An information processing device of the present invention for solving the above problem includes a driving experience information storage unit that stores driving experience information for determining a driving action of a vehicle, a driving experience information extraction unit that extracts driving experience information corresponding to each section on a traveling route of the vehicle, an information acquisition unit that acquires feedback information including an execution result of the driving experience information, the feedback information being transmitted from the vehicle after the vehicle has traveled in the section, a driving experience information evaluation unit that evaluates whether the driving experience information has been executed or whether execution of the driving experience information is necessary, based on the feedback information, and a driving experience information evaluation value updating unit that updates an evaluation value indicating an importance level of the driving experience information, based on an evaluation result of the driving experience information evaluation unit.

### Advantageous Effects of Invention

According to the present invention, for example, a vehicle side determines whether the distributed driving experience information has been executed or whether execution thereof is necessary (execution necessity), and for example, a server side weights an evaluation of the driving experience information based on the determination result to update the evaluation. This makes it possible to improve the safety and comfort of traveling of the vehicle by reducing the number of distribution times of the driving experience information that is inappropriate for the traveling environment and the traveling condition of the vehicle. Further, the availability of the system can be improved by updating the driving experience information adaptably for changes in the traveling environment and the traveling condition of the vehicle and distributing the driving experience information to the vehicle.

Further features related to the present invention will become apparent from the description of the present specification and the accompanying drawings. Problems, configurations, and effects other than those described above will be clarified by the following description of embodiments.

### Brief Description of Drawings

[FIG. 1] FIG. 1 is an overall view conceptually illustrating a driving assistance system according to a first embodiment.
[FIG. 2A] FIG. 2A is a block diagram illustrating an internal configuration of a server according to the first embodiment.
[FIG. 2B] FIG. 2B is a block diagram illustrating an internal configuration of a data arithmetic device of the server according to the first embodiment.
[FIG. 3] FIG. 3 is a diagram explaining an example of event extraction in an event extraction unit according to the first embodiment.
[FIG. 4] FIG. 4 is a block diagram illustrating an internal configuration of a vehicle control device according to the first embodiment.
[FIG. 5] FIG. 5 is a block diagram illustrating an internal configuration of a cognitive determination device according to the first embodiment.
[FIG. 6A] FIG. 6A is a diagram explaining examples of driving experience information stored in a driving experience information database according to the first embodiment.
[FIG. 6B] FIG. 6B is a diagram explaining examples of driving experience information distributed to the vehicle according to the first embodiment.
[FIG. 7] FIG. 7 is a flowchart explaining data processing (at the time of analysis (at the time of generating driving experience information)) in the data arithmetic device of the server in the first embodiment.
[FIG. 8] FIG. 8 is a diagram explaining an example of updating the driving experience information (evaluation value) based on whether the driving experience information has been executed in the first embodiment.
[FIG. 9A] FIG. 9A is a flowchart explaining data processing (at the time of distributing and updating the driving experience information) in the data arithmetic device of the server in the first embodiment.
[FIG. 9B] FIG. 9B is a flowchart explaining data processing (at the time of distributing and updating the driving experience information) in a trajectory planning unit of the cognitive determination device of the vehicle control device in the first embodiment.
[FIG. 10] FIG. 10 is a block diagram illustrating an internal configuration of a data arithmetic device of a server according to a second embodiment.
[FIG. 11] FIG. 11 is a diagram explaining an example of additional information of the driving experience information in the second embodiment.
[FIG. 12] FIG. 12 is a diagram explaining an example of updating the driving experience information (evaluation value) based on whether execution of the driving experience information is necessary in the second embodiment.
[FIG. 13A] FIG. 13A is a flowchart explaining data processing (at the time of distributing and updating the driving experience information) in the data arithmetic device of the server in the second embodiment.
[FIG. 13B] FIG. 13B is a flowchart explaining data processing (at the time of distributing and updating the driving experience information) in a trajectory planning unit of a cognitive determination device of a vehicle control device in the second embodiment.
[FIG. 14] FIG. 14 is a diagram explaining a scene example of updating the driving experience information (evaluation value) based on whether execution of the driving experience information is necessary in the second embodiment.
[FIG. 15] FIG. 15 is a block diagram illustrating an internal configuration of a data arithmetic device of a server in a third embodiment.
[FIG. 16] FIG. 16 is a diagram explaining an example of updating the driving experience information (evaluation value) based on whether the driving experience information has been executed and execution thereof is necessary in the third embodiment.
[FIG. 17A] FIG. 17A is a flowchart explaining data processing (at the time of distributing and updating the driving experience information) in the data arithmetic device of the server in the third embodiment.
[FIG. 17B] FIG. 17B is a flowchart explaining data processing (at the time of distributing and updating the driving experience information) in a trajectory planning unit of a cognitive determination device of a vehicle control device in the third embodiment.
[FIG. 18] FIG. 18 is a diagram explaining an example of updating driving experience information (evaluation value) based on whether the driving experience information has been executed, whether the execution is necessary, and whether the driving experience information is executable in a fourth embodiment.
[FIG. 19] FIG. 19 is a flowchart explaining an example of data processing (at the time of distributing and updating the driving experience information) in a data arithmetic device of a server in the fourth embodiment.
[FIG. 20] FIG. 20 is a flowchart explaining another example of the data processing (at the time of distributing and updating the driving experience information) in the data arithmetic device of the server in the fourth embodiment.
[FIG. 21] FIG. 21 is a diagram explaining an example of additional information about driving experience information in a fifth embodiment.
[FIG. 22] FIG. 22 is a diagram explaining an example of an expression for determining whether the execution of the driving experience information is necessary in the fifth embodiment.

### Description of Embodiments

Hereinafter, embodiments of the present invention will be described with reference to the drawings. Note that, in all the drawings for explaining the embodiments, portions having the same functions are denoted by the same reference numerals, and repeated description thereof may be omitted.

### [First Embodiment]

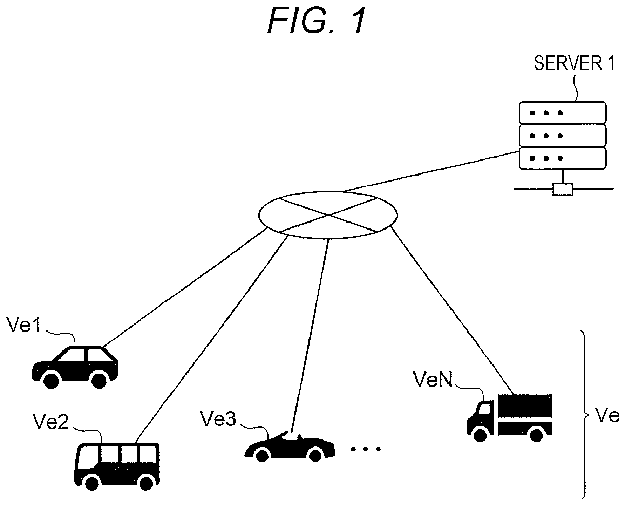

A first embodiment of the present invention will be described with reference to FIGS. 1 to 9B.

FIG. 1 is an overall view conceptually illustrating a driving assistance system according to the first embodiment.

The driving assistance system includes a server 1 and a plurality of vehicles Ve (Ve1, Ve2, Ve3, ... VeN) that are mobile objects. The server 1 and the vehicles Ve can exchange information by performing bidirectional communication using wireless communication. The server 1 extracts driving experience information from driving data sent from the vehicles Ve, and distributes, to the vehicles Ve, the driving experience information extracted in accordance with traveling environments and traveling conditions of the vehicles Ve. The vehicles Ve performs trajectory planning (sets a target trajectory and a target speed) using the driving experience information distributed from the server 1, and performs advanced driving assistance system (ADAS) and automated driving (AD).

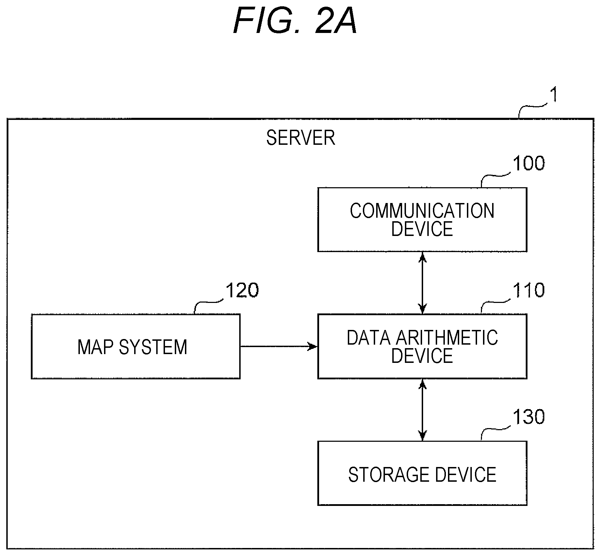

FIG. 2A is a block diagram illustrating an internal configuration of a server according to the first embodiment.

The server 1 that transmits and receives information to and from the vehicles Ve includes a communication device 100, a data arithmetic device 110, a map system 120, and a storage device 130.

The communication device 100 performs bidirectional communication of information with the vehicle Ve using wireless communication. The communication device 100 distributes driving experience information to the vehicle Ve and receives supply of feedback information including an execution result of the driving experience information (also referred to as a command) from the vehicle Ve.

The data arithmetic device 110 acquires feedback information including the execution result of the driving experience information (command) about the vehicle Ve from the communication device 100. An evaluation value indicating the importance level of the driving experience information is updated and stored based on the feedback information. The driving experience information extracted in accordance with the traveling environment and the traveling condition of the vehicle Ve (having the updated evaluation value) is provided to the communication device 100.

The map system 120 is a system that manages map data on the server 1. Alternatively, the map data may be acquired on the server 1 from an external map system.

The storage device 130 stores data used for data processing of the data arithmetic device 110, data during the data processing, data of data processing results, and the like.

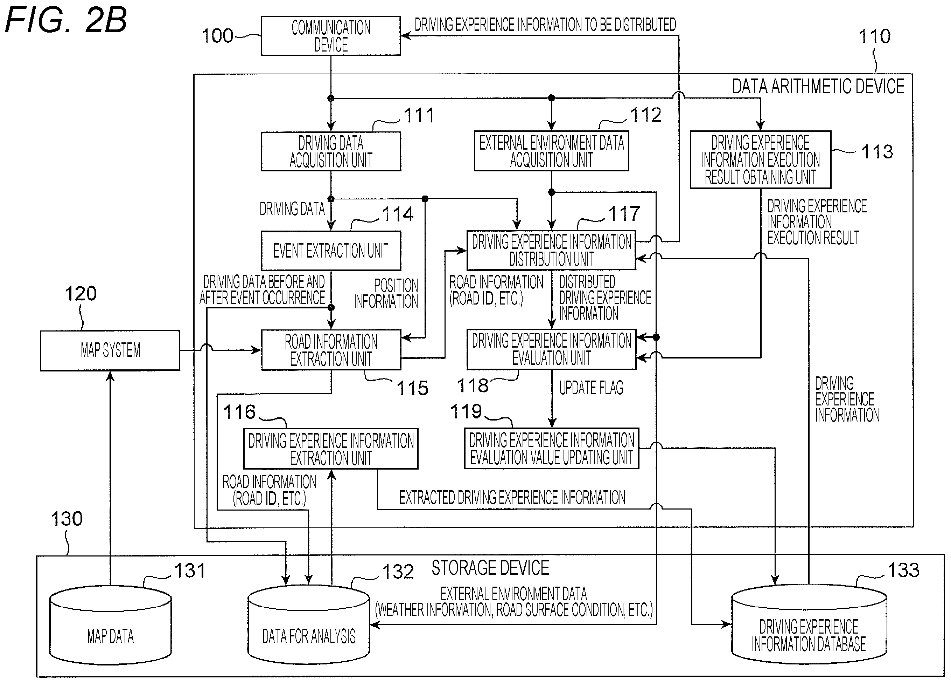

FIG. 2B is a block diagram illustrating an internal configuration of the data arithmetic device of the server according to the first embodiment.

The data arithmetic device 110 includes a driving data acquisition unit 111, an external environment data acquisition unit 112, a driving experience information execution result acquisition unit 113, an event extraction unit 114, a road information extraction unit 115, a driving experience information extraction unit 116, a driving experience information distribution unit 117, a driving experience information evaluation unit 118, and a driving experience information evaluation value updating unit 119.

The driving data acquisition unit 111 acquires driving data transmitted from the vehicles Ve via the communication device 100. The driving data includes speed information, acceleration and deceleration information, various types of internal sensor information (wiper ON/OFF, flag of direction indicator, etc.), external sensor information (camera image information, etc.) and a recognition result thereof, various types of vehicle control information (an operation flag of each automated driving function, etc.), route information (a car navigation system, etc.), position information, and the like.

The external environment data acquisition unit 112 acquires external environment data transmitted from the vehicle Ve via the communication device 100. The external environment data acquisition unit 112 acquires weather information and the like as the external environment data, but information to be acquired is not limited to the weather information. In addition to the weather information, road condition information including a road surface condition and the like can also be acquired. In the present embodiment, the external environment data transmitted from the vehicle Ve is described (either the data that is recognized by the own vehicle or the data acquired by the vehicle Ve from an external provider), but the external environment data is not limited thereto. The external environment data may be acquired from an external service provider. The acquired data is stored in (data for analysis 132 of) the storage device 130 in association with driving data before and after event occurrence, described later.

The driving experience information execution result acquisition unit 113 acquires the execution result of the driving experience information transmitted from the vehicle Ve via the communication device 100. The acquired data is transmitted to the driving experience information evaluation unit 118.

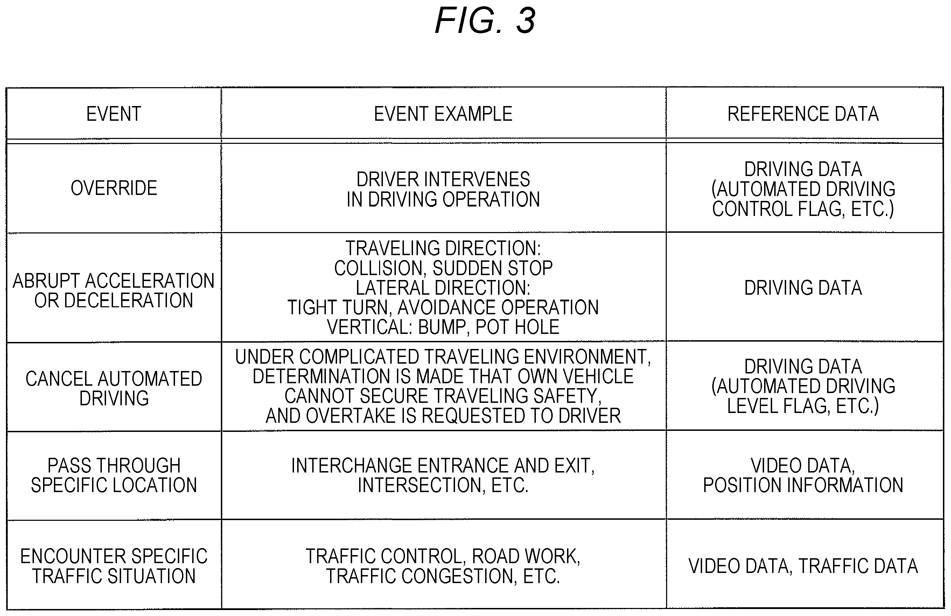

The event extraction unit 114 detects an event from the driving data based on a specified rule, extracts driving data before and after event occurrence, and stores the extracted driving data in (the data for analysis 132 of) the storage device 130. The meaning of "before and after the event occurrence" includes a predetermined time before and after the event occurrence, a predetermined section before and after the event occurrence, a predetermined distance before and after the event occurrence, and the like. FIG. 3 is a diagram explaining an example of event extraction in the event extraction unit 114 according to the first embodiment. Since the analysis of the driving data on entire itinerary is difficult, the driving data before and after the event occurrence is used as an analysis target.

The road information extraction unit 115 performs map matching based on position information (or time-series data of the position information) and map information, and acquires road information including a road ID or a road section during driving. The acquired data is stored in (the data for analysis 132 of) the storage device 130 in association with the driving data before and after event occurrence. In the present embodiment, as an example of the map information, high-precision map information having lane-based information is used, but the map information is not limited thereto. In a case where road-based map information such as a car navigation map is used, lane information can be added to the map information based on attribute information about and the standards of roads. Here, the map information is acquired from map data 131 of the storage device 130 on the server 1 via the map system 120, but map data (map provider or the like) acquired from an external system may be used in addition to the map data 131 stored in the storage device 130 of the server 1.

The driving experience information extraction unit 116 executes statistical processing based on the driving data after event extraction, the corresponding road information, and external environment data, and extracts driving experience information, such as a dynamic state of a vehicle in a normal state and a method for enabling passing through the road ID more quickly, from the data for analysis 132. That is, the driving experience information extraction unit 116 extracts the driving experience information corresponding to each section (road ID or road section) on a driving route of the vehicle. The extracted driving experience information is stored in a driving experience information database 133 of the storage device 130. As a result, driving experience information for determining a driving action of the vehicle is generated and stored.

The driving experience information distribution unit 117 searches the driving experience information registered in the driving experience information database 133 for the corresponding driving experience information and extracts it, based on road information (road ID or the like) during driving identified by the road information extraction unit 115, route information transmitted from the vehicle Ve, the external environment information (weather information or the like), and date and time information to distribute the extracted driving experience information to the vehicle Ve via the communication device 100. Note that the driving experience information to be identified is not limited to, for example, only the driving experience information corresponding to a road ID on which an own vehicle is currently traveling, and driving experience information or the like about a next road ID on which the vehicle passes through can be identified and distributed based on the route information. How many pieces of driving experience information about road IDs ahead are to be distributed to the vehicle Ve may be optionally determined in advance. Further, in a case where the external environment information cannot be acquired, the corresponding driving experience information is identified based on the remaining information. Although the route information is used in the present embodiment, the driving experience information is not limited thereto. Such information may be, for example, current position information about the vehicle Ve, or position information about a place to which a user desires to go. Further, means such that driving data is sent from the vehicle Ve to the server, and the server searches the driving data for route information and position information is also conceivable.

The driving experience information evaluation unit 118 evaluates whether the distributed driving experience information has been executed, based on the execution result of the driving experience information transmitted from the vehicle Ve and the external environment information (feedback information).

The driving experience information evaluation value updating unit 119 updates the evaluation value indicating the importance level of the driving experience information, based on the evaluation result of the driving experience information evaluation unit 118. The driving experience information including the updated evaluation values is stored in the driving experience information database 133 of the storage device 130. As a result, since (the evaluation value of) the driving experience information stored in the driving experience information database 133 is updated, the driving experience information extracted in accordance with the traveling environment and the traveling condition of the vehicle Ve can be distributed to the vehicle Ve.

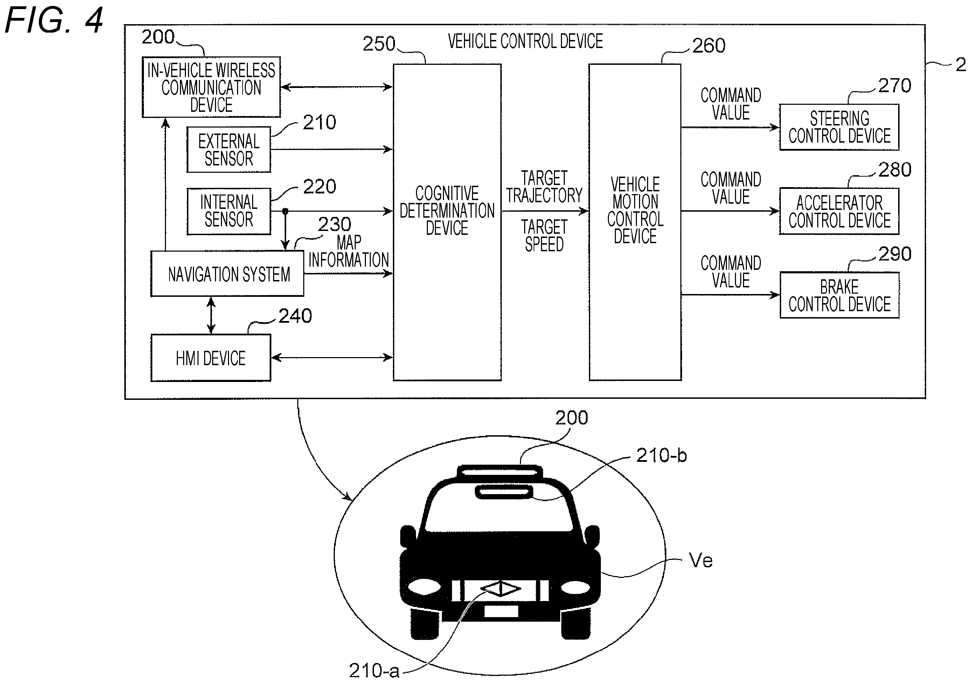

FIG. 4 is a block diagram illustrating an internal configuration of a vehicle control device according to the first embodiment.

The vehicle control device 2 is mounted on the vehicle Ve. The vehicle control device 2 includes an in-vehicle wireless communication device 200, an external sensor 210, an internal sensor 220, a navigation system 230, a human machine interface (HMI) device 240, a cognitive determination device 250, a vehicle motion control device 260, a steering control device 270, an accelerator control device 280, and a brake control device 290.

The in-vehicle wireless communication device 200 is a communication device that performs wireless communication with the server 1 or with another vehicle. The in-vehicle wireless communication device 200 acquires the driving experience information from the server 1, provides the driving experience information to the cognitive determination device 250, and transmits the driving data, the external environment data, and execution results of the driving experience information acquired from the cognitive determination device 250 to the server 1.

The external sensor 210 is an environment recognition sensor that recognizes a surrounding environment of the vehicle Ve, and includes a stereo camera 210-b and a laser infrared radar (LiDAR) 210-a. In addition to the above one, the environment recognition sensor may be a combination of a monocular camera and a laser radar. Alternatively, an ultrasonic sensor may be used. In the present embodiment, the stereo camera 210-b is included.

The internal sensor 220 is a sensor that detects an operation state of the vehicle Ve, and includes at least one of an acceleration sensor, a vehicle speed sensor, an engine rotation sensor, a throttle valve opening sensor, and the like.

The navigation system 230 is a system that shows a route to a destination on a map based on the map information and own vehicle position information and guides the vehicle Ve to the destination.

The HMI device 240 is a device operated by an occupant of the vehicle Ve, and is operated, for example, when a destination is input to the navigation system 230.

The cognitive determination device 250 executes recognition processing for recognizing the surrounding environment around the own vehicle using the driving experience information and the like. The cognitive determination device 250 transmits information about a target trajectory and a target speed to the vehicle motion control device 260 based on the result of the recognition processing.

The vehicle motion control device 260 outputs respective command values for controlling steering, accelerator opening, and brake of the vehicle Ve respectively to the steering control device 270, the accelerator control device 280, and the brake control device 290. The steering control device 270, the accelerator control device 280, and the brake control device 290 respectively control the steering, the accelerator opening, and the brake of the vehicle Ve based on command values from the vehicle motion control device 260.

The cognitive determination device 250, the vehicle motion control device 260, the steering control device 270, the accelerator control device 280, and the brake control device 290 are configured by an electronic control device (hereinafter, referred to as ECU) having a microcomputer. The ECU may be dedicated to each device, or two or more devices may be integrated into one ECU.

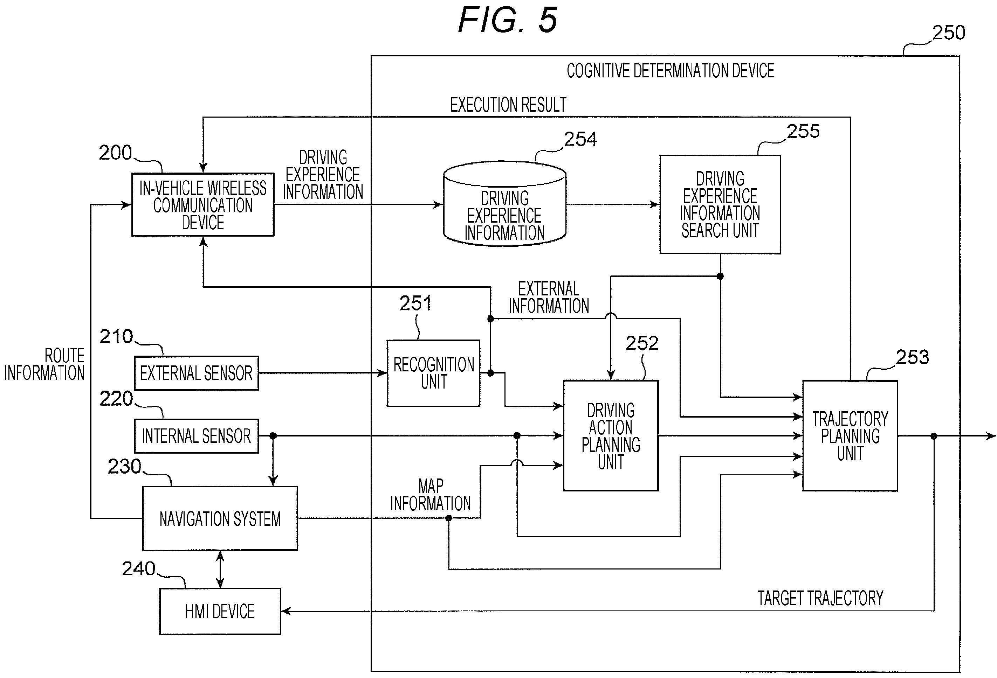

FIG. 5 is a block diagram illustrating an internal configuration of the cognitive determination device according to the first embodiment.

The cognitive determination device 250 includes a recognition unit 251, a driving action planning unit 252, a trajectory planning unit 253, and a driving experience information search unit 255.

The recognition unit 251 acquires environment data of the surrounding environment of the vehicle Ve from the external sensor 210. The recognition unit 251 executes processing for recognizing a target object around the own vehicle using detection information detected by the external sensor 210.

The driving experience information search unit 255 acquires driving experience information 254 transmitted from the server 1 via the in-vehicle wireless communication device 200. The driving experience information search unit 255 searches the acquired driving experience information 254 (also referred to as driving experience information candidate) for and identifies appropriate driving experience information based on the current traveling environment and traveling condition.

The driving action planning unit 252 execute processing for planning the driving action of the vehicle Ve based on the recognition result of the recognition unit 251, the detection result of the internal sensor 220, the map information from the navigation system 230, and the search result of the driving experience information search unit 255. The driving action planning unit 252 determines whether to adopt the driving experience information identified by the driving experience information search unit 255, based on the recognition result of the recognition unit 251, the detection result of the internal sensor 220, and the map information from the navigation system 230, and plans the driving action of the vehicle Ve.

The trajectory planning unit 253 plans the trajectory (a target trajectory and a target speed) of the vehicle Ve based on the external information, the driving action plan, the detection result of the internal sensor 220, the map information from the navigation system 230, and the search result of the driving experience information search unit 255. When determining to adopt the driving experience information identified by the driving experience information search unit 255, the trajectory planning unit 253 plans the trajectory of the vehicle Ve based on the external information, the driving action plan, the detection result of the internal sensor 220, the map information from the navigation system 230, and the driving experience information. On the other hand, in a case where the determination is made not to adopt the driving experience information identified by the driving experience information search unit 255, the trajectory planning unit 253 plans the trajectory of the vehicle Ve based on the external information, the driving action plan, the detection result of the internal sensor 220, and the map information from the navigation system 230 (without using the identified driving experience information). Further, the trajectory planning unit 253 transmits an execution result of the identified driving experience information to the server 1 via the in-vehicle wireless communication device 200.

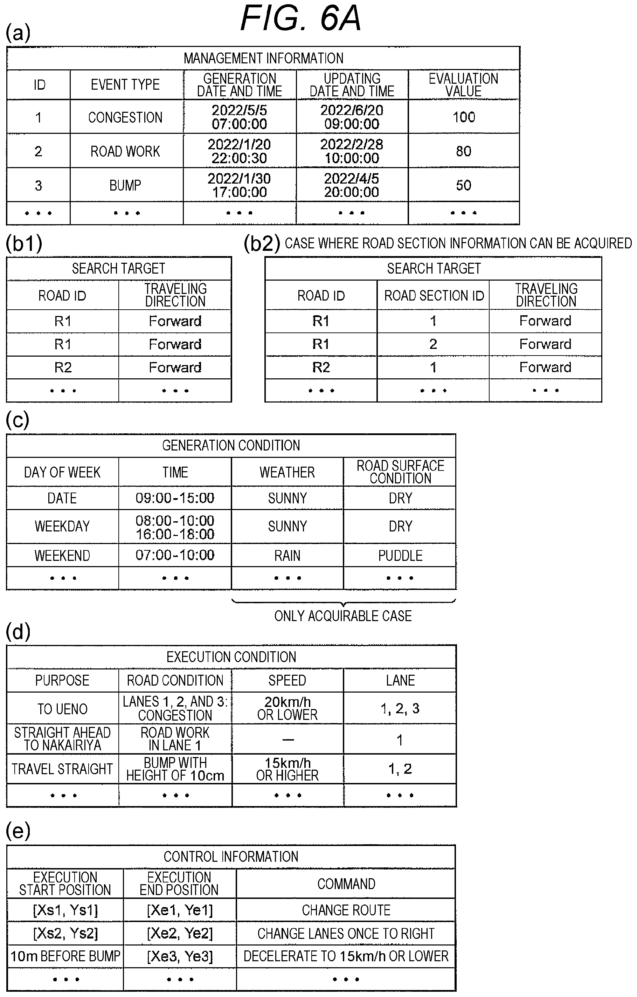

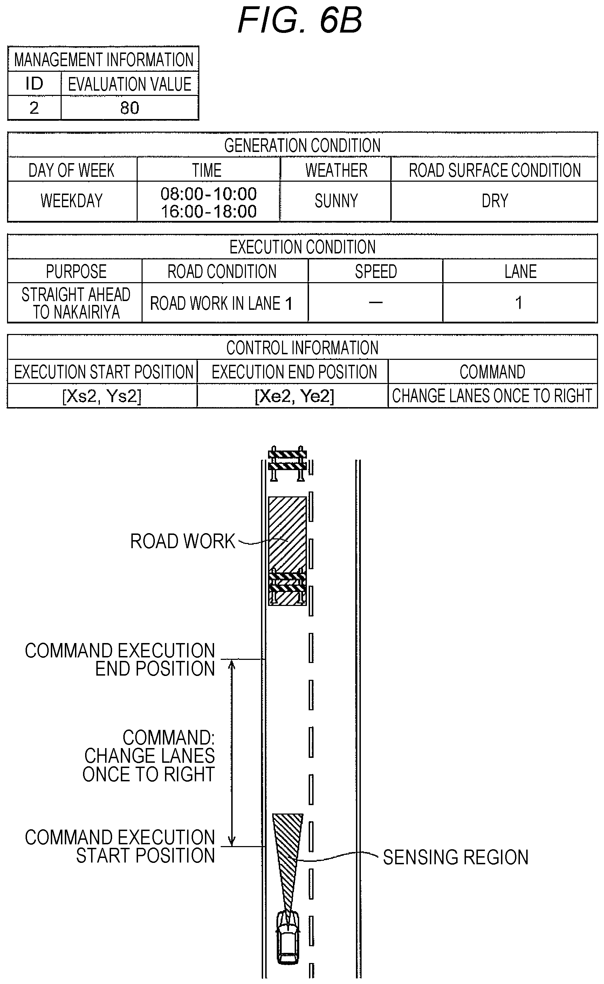

FIG. 6A is a diagram explaining examples of the driving experience information stored in the driving experience information database in the first embodiment. FIG. 6B is a diagram explaining examples of the driving experience information distributed to the vehicle in the first embodiment.

As illustrated in FIG. 6A, the driving experience information stored in the driving experience information database 133 includes (a) "management information", (b1) ((b2) in a case where road section information can be acquired) "search target", (c) "occurrence condition", (d) "execution condition", (e) "control information", and the like. Note that (b1) (or (b2)) "search target", and "day of week" and "time" in (c) "occurrence condition" are information used by the server 1 at the time of search, and "weather" and "road surface condition" in (c) "occurrence condition", and (d) "execution condition" are information used by the vehicle Ve at the time of search.

When narrowing down the driving experience information distributed from the driving experience information database 133 to the vehicle Ve, the driving experience information distribution unit 117 identifies the corresponding driving experience information based on the road information (road ID or the like) and the external environment information. For example, the driving experience information distribution unit 117 searches for corresponding driving experience information regarding (b1) (or (b2)) "search target", and the day-of-week information and the time information in (c) "generation condition" based on the road information. In this case, the driving experience information distribution unit 117 distributes the information including "ID" in (a) "management information", (c) "occurrence condition", (d) "execution condition", and (e) "control information" to the vehicle Ve, and the information (c) and (d) is checked on the vehicle side. Note that the information (c) may be entirely checked on the server side and then distributed to the vehicle Ve. The driving experience information distribution unit 117 then distributes the corresponding items to the vehicle Ve. At this time, only "ID" and "evaluation value" in (a) "management information", (d) "execution condition", and (e) "control information" are distributed as the information to be distributed in order to reduce traffic (see FIG. 6B). However, all the pieces of information (a) to (e) may be distributed to the vehicle Ve.

The vehicle Ve to which the driving experience information is distributed determines whether the generation condition and the execution condition (see FIG. 6B) of the distributed driving experience information are satisfied, based on the driving data and the external environment information. In a case where no driving experience information that has satisfied the conditions is present, the driving experience information is not adopted. On the other hand, in a case where the driving experience information that has satisfied the conditions is present, the vehicle Ve determines whether to adopt the driving experience information, based on the surrounding situation. In a case where a plurality of driving experience information candidates is present, a determination is made whether to adopt certain driving experience information among the plurality of driving experience information candidates, based on the surrounding situation and the evaluation value (see FIG. 6B).

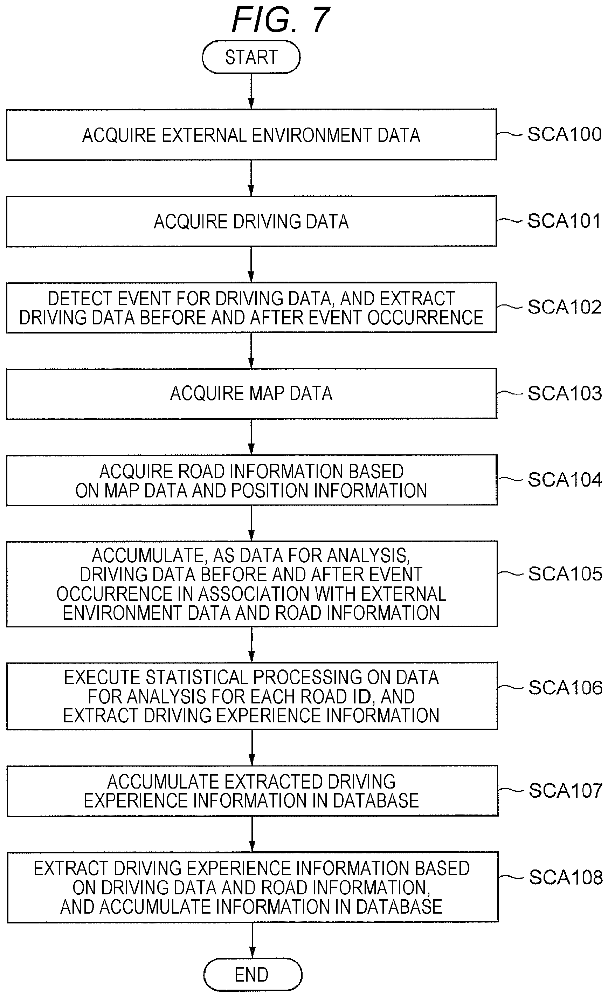

FIG. 7 is a flowchart explaining data processing (at the time of analysis (at the time of generating driving experience information)) in the data arithmetic device of the server in the first embodiment.

In the data arithmetic device 110 of the server 1, the external environment data acquisition unit 112 acquires the external environment data transmitted from the vehicle Ve (SCA100). Further, the driving data acquisition unit 111 acquires driving data transmitted from the vehicle Ve (SCA101).

The event extraction unit 114 then detects an event for the driving data and extracts driving data before and after event occurrence (SCA102).

In addition, the road information extraction unit 115 acquires map data from the map system 120 (SCA103), and acquires road information based on the map data and the position information (or time-series data of the position information) (SCA104).

Thereafter, the driving data before and after the event occurrence is associated with the external environment data and the road information, and is accumulated (stored) as data for analysis 132 (SCA105).

The driving experience information extraction unit 116 then executes, as for the road information (for example, for each road ID), statistical processing on the data for analysis 132 to extract the driving experience information (SCA106). The extracted driving experience information is accumulated (stored) in the driving experience information database 133 of the storage device 130 (SCA107). The driving experience information extraction unit 116 extracts driving experience information based on the driving data and the road information, and accumulates (stores) the extracted driving experience information in the driving experience information database 133 of the storage device 130 (SCA108).

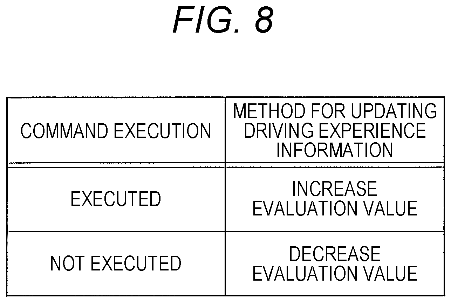

FIG. 8 is a diagram explaining an example of updating the driving experience information (evaluation value) based on whether the driving experience information has been executed in the first embodiment.

FIG. 8 illustrates an example of a case where (the evaluation value of) the driving experience information is updated based on the execution result of the driving experience information transmitted from the vehicle Ve. In the present embodiment, in a case where the driving experience information is executed, the evaluation value of the driving experience information is increased. In a case where the driving experience information is not executed, the evaluation value of the driving experience information is decreased.

In the case of updating the evaluation value, a point addition list, a point reduction list, or a table is prepared in each case, and weighting is performed. The updating may be performed by adding or subtracting a predetermined value to or from the original evaluation value, or by multiplying the original evaluation value by a predetermined value larger than or smaller than 1.

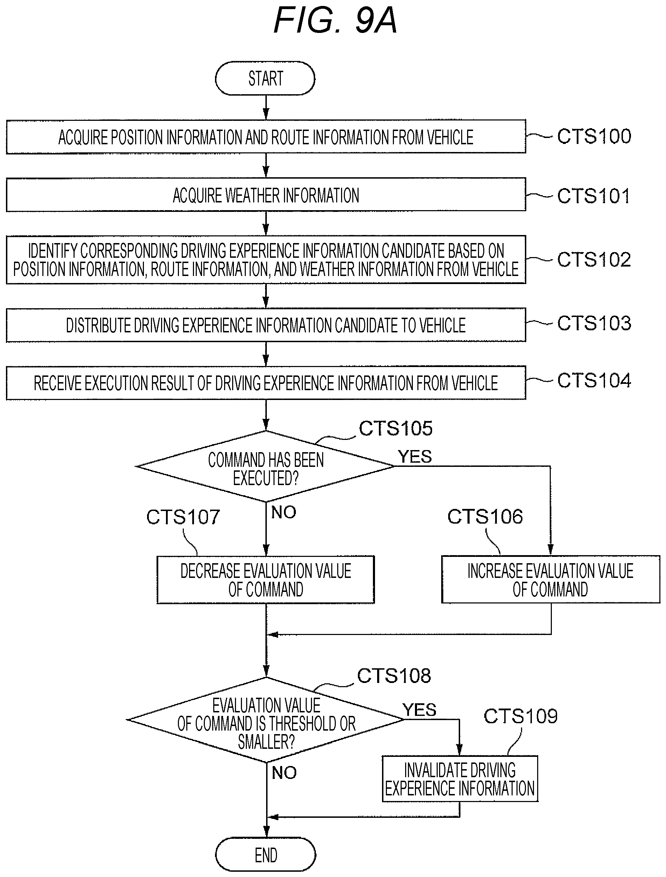

FIG. 9A is a flowchart explaining data processing (at the time of distributing and updating the driving experience information) in the data arithmetic device of the server in the first embodiment.

In the data arithmetic device 110 of the server 1, the driving data acquisition unit 111 acquires driving data (position information, route information, and the like) transmitted from the vehicle Ve (CTS100), and the external environment data acquisition unit 112 acquires external environment data (weather information and the like) transmitted from the vehicle Ve (CTS101).

Thereafter, the driving experience information distribution unit 117 identifies corresponding driving experience information (also referred to as a driving experience information candidate) based on the driving data (position information, route information, and the like) and the external environment data (weather information and the like) transmitted from the vehicle Ve (CTS102), and distributes the identified driving experience information (driving experience information candidate) to the vehicle Ve (CTS103).

Further, the driving experience information execution result acquisition unit 113 receives the execution result of the driving experience information transmitted from the vehicle Ve (CTS104). The execution result of the driving experience information received here is feedback information transmitted (output) from the vehicle after the vehicle has traveled in a section on the travel route of the vehicle.

The driving experience information evaluation unit 118 then evaluates whether the distributed driving experience information (command) has been executed (execution or non-execution) (CTS105).

In a case where the driving experience information has been executed, the driving experience information evaluation value updating unit 119 increases the evaluation value of the driving experience information (CTS106). In a case where the driving experience information has not been executed, the driving experience information evaluation value updating unit 119 decreases the evaluation value of the driving experience information (CTS107).

Further, the driving experience information evaluation value updating unit 119 determines whether the evaluation value of the driving experience information (after update) is smaller than or equal to a predetermined threshold (CTS108), and invalidates the driving experience information (CTS109) when the evaluation value becomes smaller than or equal to the predetermined threshold, and ends the processing. Note that, here, an example of the case where the driving experience information is invalidated in consideration of the following processing is described, but processing for deleting the driving experience information from the database may be executed in order to reduce the data storage amount.

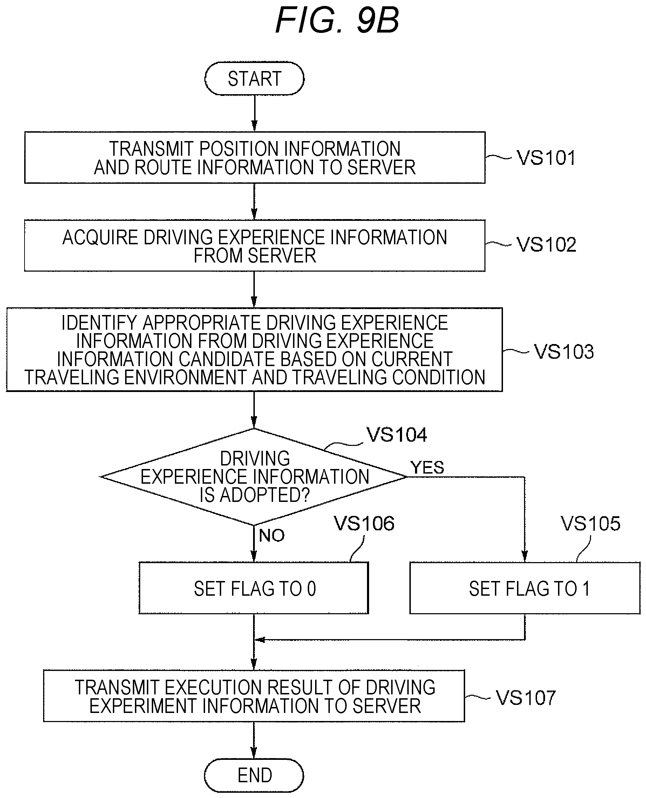

FIG. 9B is a flowchart explaining data processing (at the time of distributing and updating the driving experience information) in the trajectory planning unit of the cognitive determination device of the vehicle control device in the first embodiment.

The cognitive determination device 250 transmits driving data (position information, route information, and the like) to the server 1 (VS101). Further, the driving experience information transmitted from the server 1 is acquired (VS102).

The driving experience information search unit 255 identifies appropriate driving experience information from the acquired driving experience information (also referred to as driving experience information candidates) based on the current traveling environment and traveling condition (VS103). For example, a plurality of pieces of driving experience information having different traveling conditions (for example, traveling lanes) in a section on the traveling route of the vehicle is distributed to the vehicle Ve, and the vehicle Ve selects driving experience information to be executed based on the external information about the vehicle from the plurality of pieces of driving experience information (during traveling in the section).

The driving action planning unit 252 then determines whether to adopt the identified driving experience information (VS104). In a case where the driving experience information is adopted, an execution flag is set to 1 (VS105), and in a case where the driving experience information is not adopted, the execution flag is set to 0 (VS106).

The trajectory planning unit 253 then transmits the execution result of the identified driving experience information to the server 1 (VS107).

That is, at a time of using the driving experience information, the vehicle Ve determines whether the generation condition and the execution condition of the distributed driving experience information are satisfied, based on the driving data and the external environment information. In a case where no driving experience information that has satisfied the conditions is present, the driving experience information is not adopted. On the other hand, in a case where the driving experience information that has satisfied the conditions is present, the vehicle Ve determines whether to adopt the driving experience information, based on the surrounding situation. Note that in a case where a plurality of driving experience information candidates is present, a determination is made whether to adopt certain driving experience information among the plurality of driving experience information candidates, based on the surrounding situation and the evaluation value. A determination result as to whether the driving experience information has been adopted (executed) is transmitted to the server 1.

In the driving assistance system of the present embodiment described above, the vehicle Ve transmits the execution result of the driving experience information to the server 1. The server 1 then updates (weights an evaluation of driving experience information to update it) the evaluation value of the driving experience information based on the execution result of the driving experience information sent from the vehicle Ve. The server 1 extracts the driving experience information from the driving data sent from the vehicle Ve, and distributes, to the vehicle Ve, the driving experience information extracted in accordance with the traveling environment and the traveling condition of the vehicle Ve. The vehicles Ve performs trajectory planning (sets a target trajectory and a target speed) using the driving experience information distributed from the server 1, and performs advanced driving assistance system (ADAS) and automated driving (AD).

According to the present embodiment, for example, a vehicle side determines whether the distributed driving experience information has been executed, and a server side weights the evaluation of the driving experience information to update the evaluation based on the determination result. This makes it possible to improve the safety and comfort of traveling of the vehicle by reducing the number of distribution times of the driving experience information that is inappropriate for the traveling environment and the traveling condition of the vehicle. Further, the availability of the system can be improved by updating the driving experience information adaptably for changes in the traveling environment and the traveling condition of the vehicle and distributing the driving experience information to the vehicle.

### [Second Embodiment]

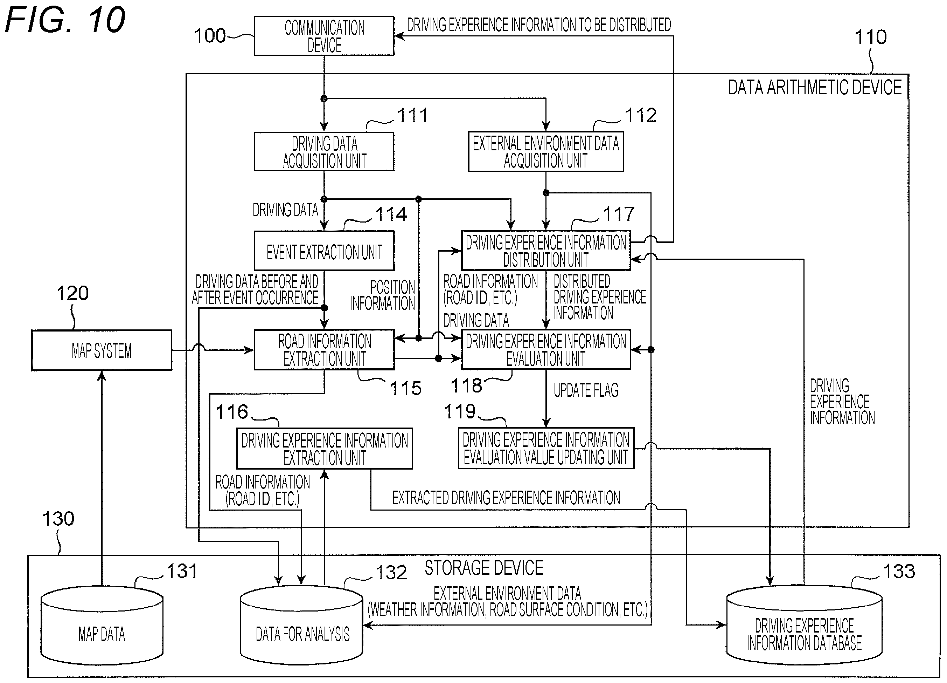

A second embodiment of the present invention will be described below with reference to FIGS. 10 to 14.

The characteristic in the present embodiment is that the driving experience information is updated based on whether execution of the driving experience information is necessary (execution necessity) (not whether the driving experience information has been executed).

FIG. 10 is a block diagram illustrating an internal configuration of the data arithmetic device of the server according to the second embodiment.

In comparison with the block diagram of the first embodiment illustrated in FIG. 2B, driving data and road information (road ID and the like) output from the road information extraction unit 115 are added as input information of the driving experience information evaluation unit 118. In order to analyze whether the execution of the driving experience information is necessary, it is necessary to analyze the driving data in an execution range of the driving experience information (command). Based on the analysis result, an evaluation is made whether the execution of the driving experience information is necessary.

Further, in the present embodiment, since the determination is made whether only the execution of the driving experience information is necessary, the data arithmetic device 110 does not receive the execution result of the driving experience information from the vehicle Ve. Therefore, the driving experience information execution result acquisition unit 113 of the first embodiment is omitted.

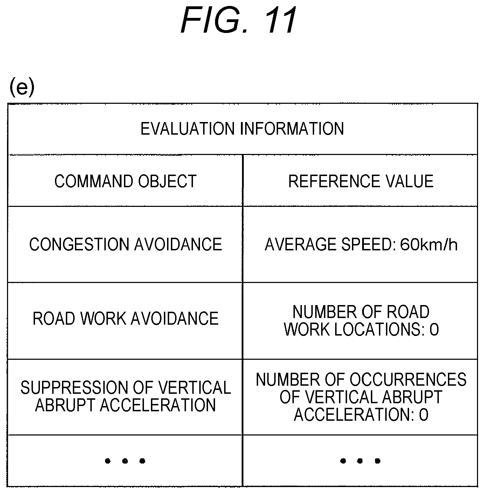

FIG. 11 is a diagram explaining an example of additional information of the driving experience information in the second embodiment.

In comparison with the driving experience information in the first embodiment illustrated in FIG. 6A and 6B, (e) "evaluation information" is added as the driving experience information. In the present embodiment, in a case of evaluating whether the execution of the driving experience information is necessary, the server 1 side analyzes driving data, monitors a traveling trajectory and a traveling state, and evaluates the driving experience information candidate distributed to the vehicle Ve as to whether "road situation" in (d) "execution condition" has been resolved or whether "command object" and "reference value" in (e) "evaluation information" have been achieved (or whether to exceed "reference value"). In other words, the vehicle external information and the vehicle control information in a section corresponding to the driving experience information are evaluated.

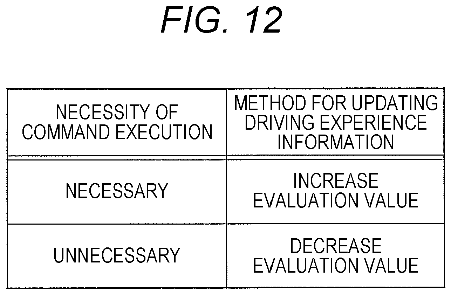

FIG. 12 is a diagram explaining an example of updating the driving experience information (evaluation value) based on whether the execution of the driving experience information is necessary in the second embodiment.

FIG. 12 illustrates an example of a case where (the evaluation value of) the driving experience information is updated based on the execution result of the driving data in the execution range of the driving experience information (command). In the present embodiment, in a case where the execution of the driving experience information is necessary, the evaluation value of the driving experience information is increased. In a case where the execution of the driving experience information is unnecessary, the evaluation value of the driving experience information is decreased.

In the case of updating the evaluation value, a point addition list, a point reduction list, or a table is prepared in each case, and weighting is performed. The updating may be performed by adding or subtracting a predetermined value to or from the original evaluation value, or by multiplying the original evaluation value by a predetermined value larger than or smaller than 1.

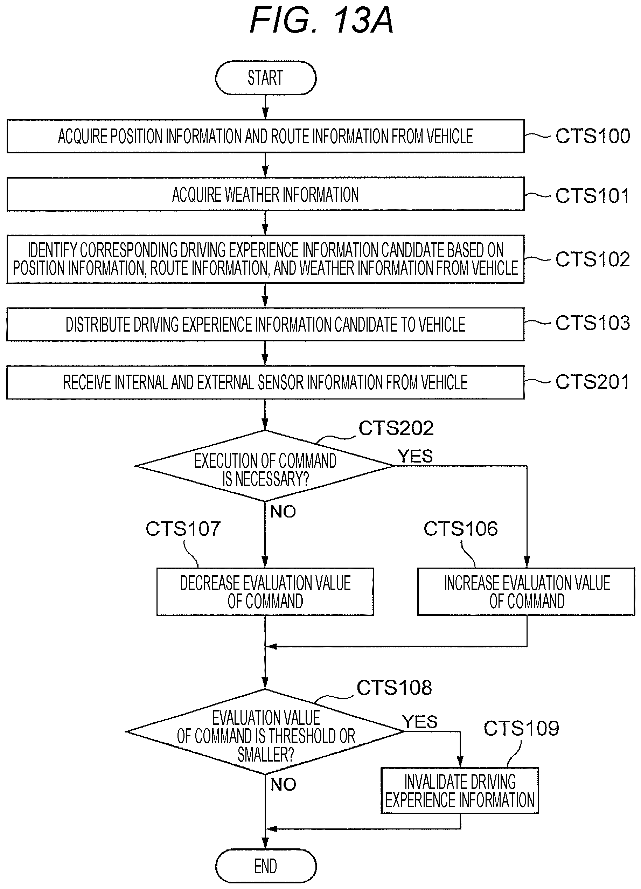

FIG. 13A is a flowchart explaining data processing (at the time of distributing and updating the driving experience information) in the data arithmetic device of the server in the second embodiment.

A difference from the flowchart of the first embodiment illustrated in FIG. 9A is that CTS201 and CTS202 are added instead of CTS104 and the CTS105. The driving experience information evaluation unit 118 receives internal sensor information, external sensor information, and the like transmitted from the vehicle Ve (CTS201). The driving experience information evaluation unit 118 then evaluates whether the execution of the distributed driving experience information (command) is necessary (CTS202).

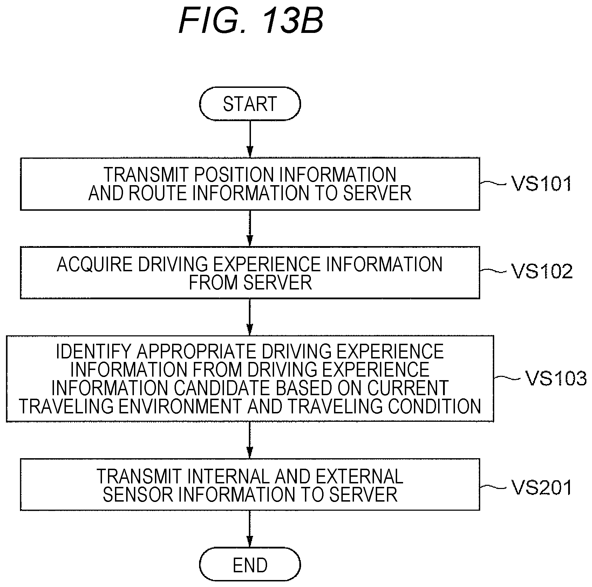

FIG. 13B is a flowchart explaining data processing (at the time of distributing and updating the driving experience information) in the trajectory planning unit of the cognitive determination device of the vehicle control device in the second embodiment.

A difference from the flowchart of the first embodiment illustrated in FIG. 9B is that VS104 to VS106 are omitted, and VS201 is added instead of VS107. The trajectory planning unit 253 transmits the internal sensor information and the external sensor information to the server 1 in order to analyze the driving data on the server 1 side (VS201).

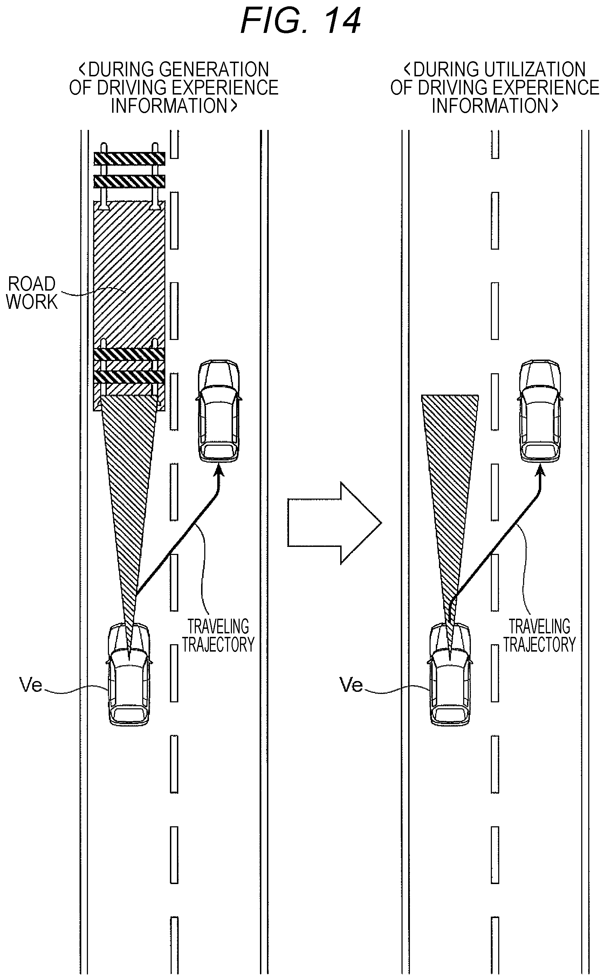

FIG. 14 is a diagram explaining a scene example of updating the driving experience information (evaluation value) based on whether the execution of the driving experience information is necessary in the second embodiment.

When the vehicle Ve travels in the scene of the left part of FIG. 14, in order to avoid road work, driving experience information "make a lane change to the right lane once" is generated based on a traveling history such that many vehicles have made a lane change to the right lane.

When a transition is made from the scene of the left part of FIG. 14 to the scene of the right part, there is no road work. For this reason, a lane change does not have to be made in response to the distributed driving experience information (in other words, the driving experience information distributed on the vehicle Ve side does not have to be adopted). Therefore, the evaluation value of the distributed driving experience information is decreased.

In the driving assistance system of the present embodiment described above, the vehicle Ve transmits driving data and the like (internal sensor information and external sensor information) to the server 1. The server 1 then updates the evaluation value of the driving experience information (weights to update the evaluation of the driving experience information) based on the driving data and the like. The server 1 extracts the driving experience information from the driving data sent from the vehicle Ve, and distributes, to the vehicle Ve, the driving experience information extracted in accordance with the traveling environment and the traveling condition of the vehicle Ve. The vehicles Ve performs trajectory planning (sets a target trajectory and a target speed) using the driving experience information distributed from the server 1, and performs advanced driving assistance system (ADAS) and automated driving (AD).

According to the present embodiment, for example, the vehicle side determines whether the execution of the distributed driving experience information is necessary (execution necessity), and for example, the server side weights an evaluation of the driving experience information based on the determination result to update the evaluation. This makes it possible to improve the safety and comfort of traveling of the vehicle by reducing the number of distribution times of the driving experience information that is inappropriate for the traveling environment and the traveling condition of the vehicle. Further, the availability of the system can be improved by updating the driving experience information adaptably for changes in the traveling environment and the traveling condition of the vehicle and distributing the driving experience information to the vehicle.

### [Third Embodiment]

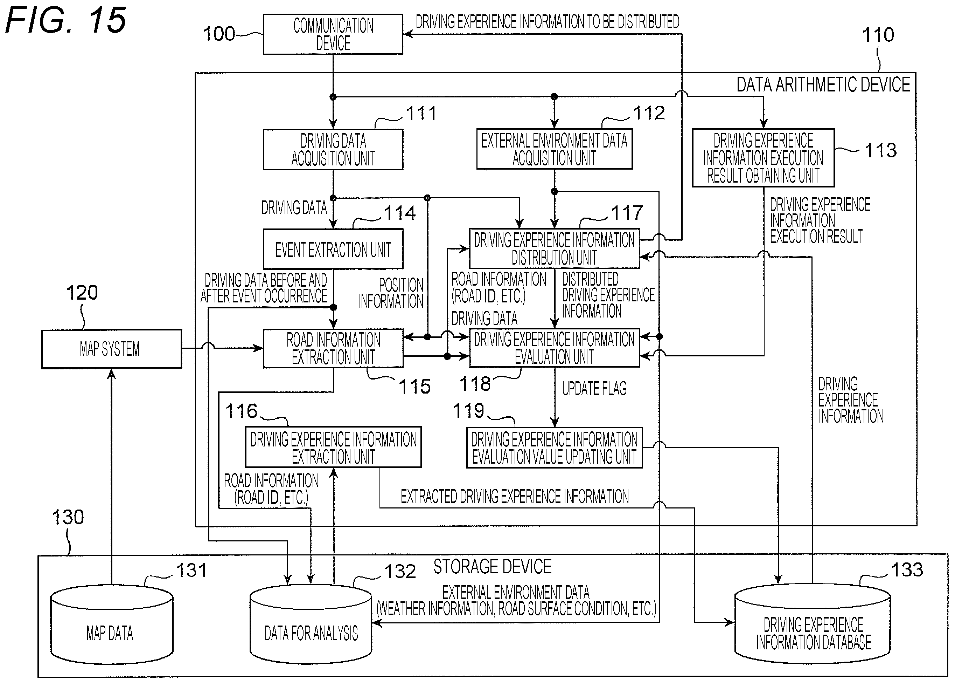

A third embodiment of the present invention will be described below with reference to FIGS. 15 to 17B.

The characteristic in the present embodiment is that driving experience information is updated based on whether the driving experience information has been executed and whether execution thereof is necessary (execution necessity). That is, this configuration is obtained by combining the first embodiment and the second embodiment.

FIG. 15 is a block diagram illustrating an internal configuration of the data arithmetic device of the server according to the third embodiment.

The configuration illustrated in FIG. 15 is obtained by combining the block diagram of the first embodiment illustrated in FIG. 2B and the block diagram of the second embodiment illustrated in FIG. 10. That is, in comparison with the block diagram of the second embodiment illustrated in FIG. 10, the driving experience information execution result acquisition unit 113 of the first embodiment illustrated in FIG. 2B is introduced, and the execution result of the driving experience information transmitted from the vehicle Ve is output to the driving experience information evaluation unit 118.

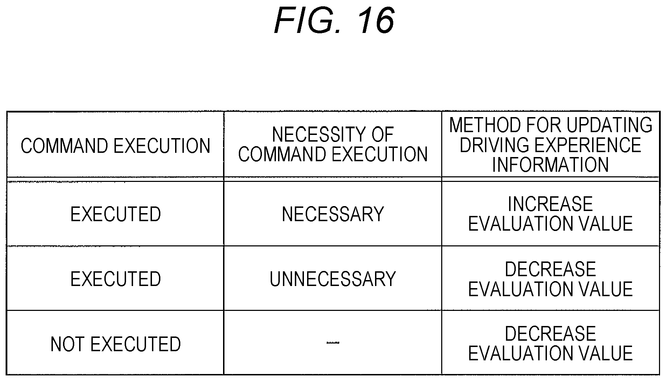

FIG. 16 is a diagram explaining an example of updating the driving experience information (evaluation value) based on whether the driving experience information has been executed and whether the execution of the driving experience information is necessary in the third embodiment.

FIG. 16 illustrates an example of a case where (the evaluation value of) the driving experience information is updated based on the execution result of the driving experience information transmitted from the vehicle Ve and the analysis result of the driving data in the execution range of the driving experience information (command). In the present embodiment, in a case where the driving experience information has been executed and whether the execution of the driving experience information is necessary, the evaluation value of the driving experience information is increased. In a case where the driving experience information has been executed but the execution of the driving experience information is unnecessary, or in a case where the driving experience information has not been executed, the evaluation value of the driving experience information is decreased.

In the case of updating the evaluation value, a point addition list, a point reduction list, or a table is prepared in each case, and weighting is performed. The updating may be performed by adding or subtracting a predetermined value to or from the original evaluation value, or by multiplying the original evaluation value by a predetermined value larger than or smaller than 1.

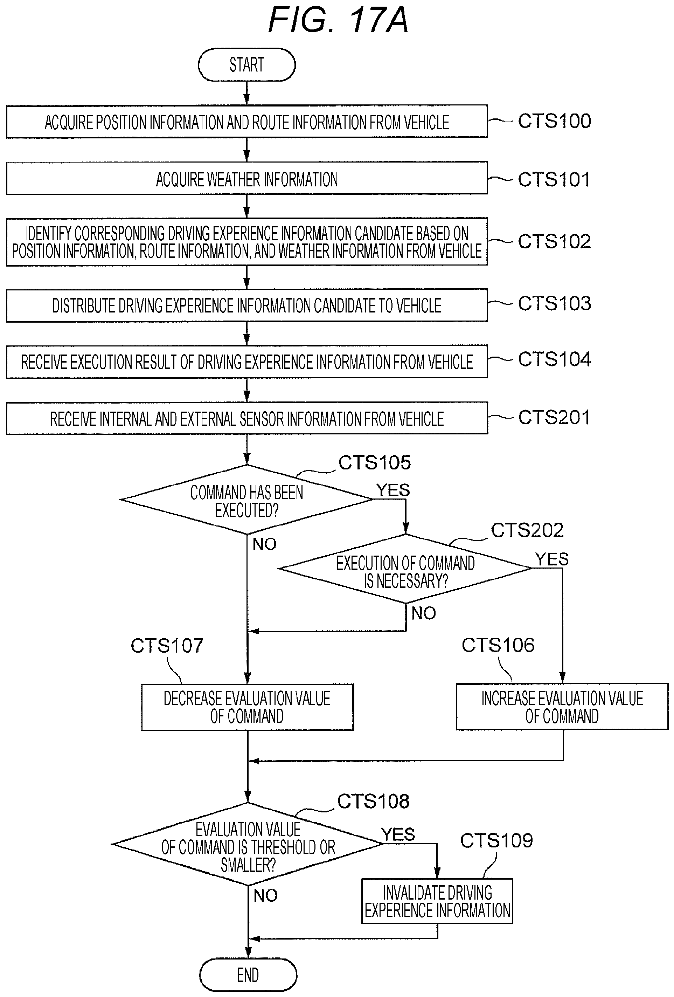

FIG. 17A is a flowchart explaining data processing (at the time of distributing and updating the driving experience information) in the data arithmetic device of the server in the third embodiment.

The configuration illustrated in FIG. 17A is obtained by combining the flowchart of the first embodiment illustrated in FIG. 9A and the flowchart of the second embodiment illustrated in FIG. 13A. Further, the driving experience information evaluation unit 118 receives the execution result of the driving experience information transmitted from the vehicle Ve (CTS104). Further, the driving experience information evaluation unit 118 receives internal sensor information, external sensor information, and the like transmitted from the vehicle Ve (CTS201). The driving experience information evaluation unit 118 then evaluates whether the distributed driving experience information (command) has been executed (execution or non-execution) (CTS105). In a case where the driving experience information has been executed, an evaluation is made whether the execution of the distributed driving experience information (command) is necessary (CTS202).

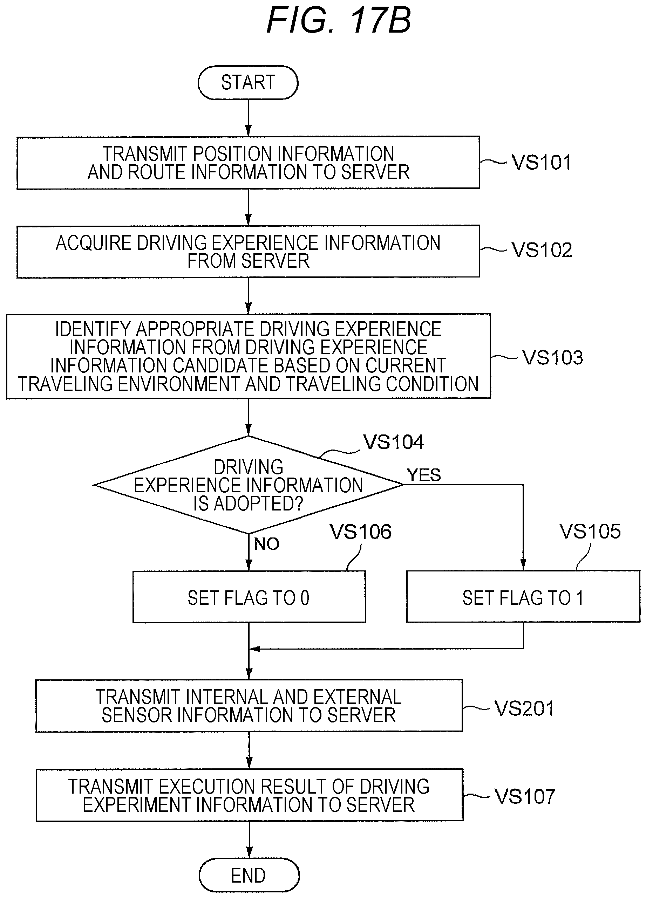

FIG. 17B is a flowchart explaining data processing (at the time of distributing and updating the driving experience information) in the trajectory planning unit of the cognitive determination device of the vehicle control device in the third embodiment.

The configuration illustrated in FIG. 17B is obtained by combining the flowchart of the first embodiment illustrated in FIG. 9B and the flowchart of the second embodiment illustrated in FIG. 13B. Before transmitting the execution result of the identified driving experience information to the server 1 (VS107), the trajectory planning unit 253 transmits the internal sensor information and the external sensor information to the server 1(VS201) in order to analyze the driving data on the server 1 side.

According to the present embodiment, for example, the vehicle side determines whether the distributed driving experience information has been executed and whether the execution of the distributed driving experience information is necessary (execution necessity), and for example, the server side weights an evaluation of the driving experience information based on the determination result to update the evaluation. This makes it possible to improve the safety and comfort of traveling of the vehicle by reducing the number of distribution times of the driving experience information that is inappropriate for the traveling environment and the traveling condition of the vehicle. Further, the availability of the system can be improved by updating the driving experience information adaptably for changes in the traveling environment and the traveling condition of the vehicle and distributing the driving experience information to the vehicle.

### [Fourth Embodiment]

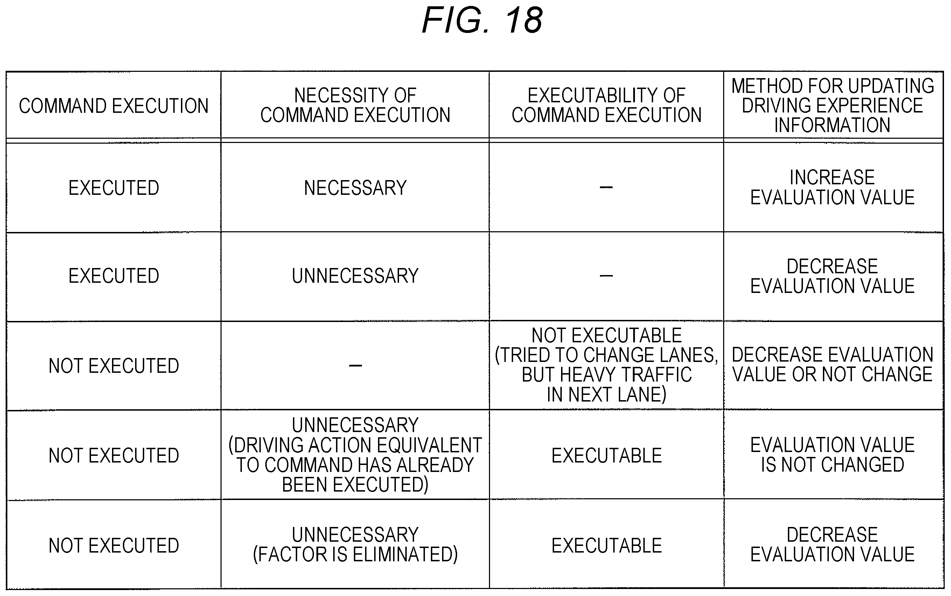

A fourth embodiment of the present invention will be described below with reference to FIGS. 18 to 20.

The characteristic in the present embodiment is that the driving experience information is updated based on whether the driving experience information has been executed, whether the execution is necessary (execution necessity), and whether the driving experience information is executable.

Since the internal configuration of the data arithmetic device of the server in the fourth embodiment is similar to the internal configuration of the data arithmetic device of the server in the third embodiment illustrated in FIG. 15, illustration is omitted.

FIG. 18 is a diagram explaining an example of updating the driving experience information (evaluation value) based on whether the driving experience information has been executed, whether the execution is necessary, and whether the driving experience information is executable in the fourth embodiment.

In comparison with the update pattern of the third embodiment illustrated in FIG. 16, an update pattern in a case where the driving experience information has not been executed is added based on whether the driving experience information is executable. In the present embodiment, in a case where the driving experience information has not been executed and the driving experience information is inexecutable (in a case where a lane change is attempted but an adjacent lane is also congested, or the like), the evaluation value of the driving experience information is decreased or not changed. In the case where the driving experience information has not been executed and the driving experience information is executable but the execution of the driving experience information is unnecessary (in a case where a driving action equivalent to the driving experience information has already been executed), the evaluation value of the driving experience information is not changed. In a case where the driving experience information is executable but the execution of the driving experience information is unnecessary (in a case where the factor has been eliminated), the evaluation value of the driving experience information is decreased.

In the case of updating the evaluation value, a point addition list, a point reduction list, or a table is prepared in each case, and weighting is performed. The updating may be performed by adding or subtracting a predetermined value to or from the original evaluation value, or by multiplying the original evaluation value by a predetermined value larger than or smaller than 1.

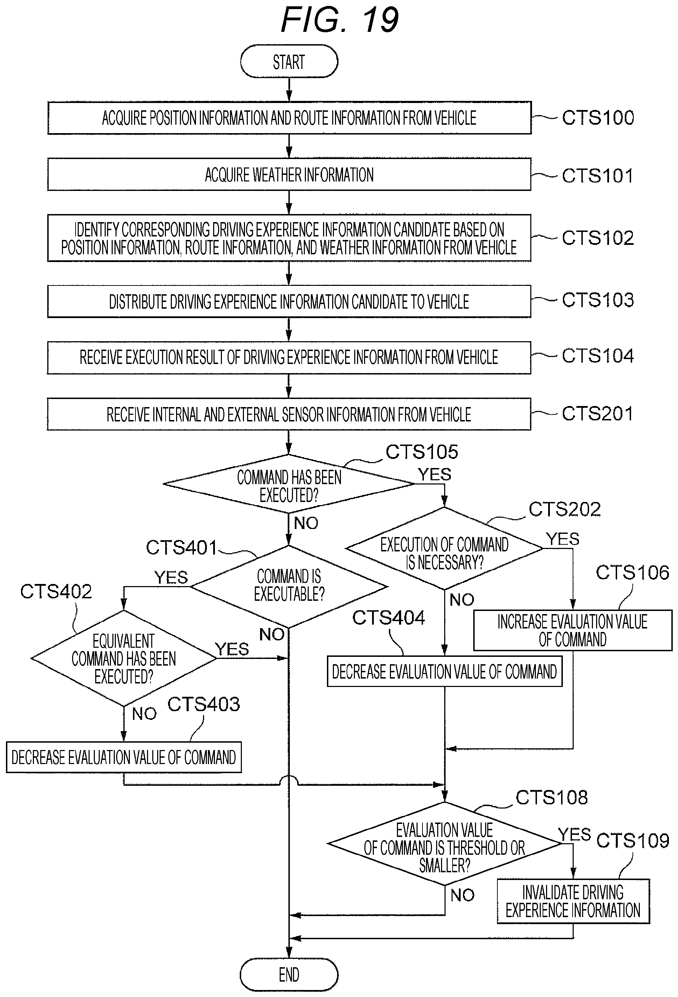

FIG. 19 is a flowchart explaining an example of data processing (at the time of distributing and updating the driving experience information) in the data arithmetic device of the server in the fourth embodiment.

A difference from the flowchart of the third embodiment illustrated in FIG. 17A is that CTS401, CTS402, CTS403, and CTS404 are added. In a case where the driving experience information has not been executed, the driving experience information evaluation unit 118 evaluates whether the driving experience information is executable (executability) (CTS401). In a case where the driving experience information is been executable, the processing ends (the evaluation value is not changed). In a case where the driving experience information is executable, the driving experience information evaluation unit 118 evaluates whether equivalent driving experience information (command) has already been executed (whether a driving action equivalent to the driving experience information (command) has already been executed) (CTS402). In a case where the equivalent driving experience information (command) has been executed, the processing ends (the evaluation value is not changed). In a case where the equivalent driving experience information (command) has not been executed, the driving experience information evaluation value updating unit 119 decreases the evaluation value of the driving experience information (CTS403).

In addition, in a case where the driving experience information has been executed and execution of the distributed driving experience information (command) is unnecessary, the driving experience information evaluation value updating unit 119 decreases the evaluation value of the driving experience information (CTS404).

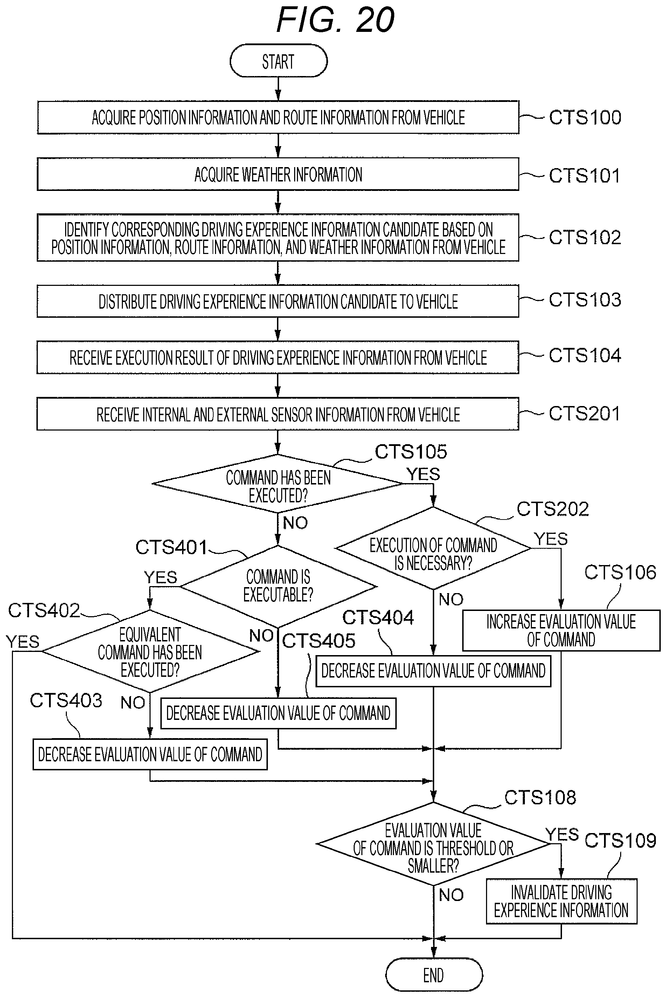

FIG. 20 is a flowchart explaining another example of data processing (at the time of distributing and updating the driving experience information) in the data arithmetic device of the server in the fourth embodiment.

A difference from the flowchart of the third embodiment illustrated in FIG. 17A is that CTS401, CTS402, CTS403, CTS404, and CTS405 are added. In other words, this flowchart is different from the flowchart illustrated in FIG. 19 in that CTS405 is added. In a case where the driving experience information is inexecutable, the driving experience information evaluation value updating unit 119 decreases the evaluation value of the driving experience information (CTS405).

That is, the flowchart illustrated in FIG. 19 illustrates an example of a case where the driving experience information evaluation value updating unit 119 does not change the evaluation value of the driving experience information in a case where the driving experience information is inexecutable. The flowchart illustrated in FIG. 20 illustrates an example of a case where the driving experience information evaluation value updating unit 119 decreases the evaluation value of the driving experience information in a case where the driving experience information is inexecutable.

In the flowcharts illustrated in FIGS. 19 and 20, the driving experience information evaluation value updating unit 119 determines whether the evaluation value of the driving experience information (after update) is smaller than or equal to a predetermined threshold only when the evaluation value of the driving experience information is changed (updated).

According to the present embodiment, for example, the vehicle side determines whether the distributed driving experience information has been executed, whether the execution of the distributed driving experience information is necessary (execution necessity), and whether the distributed driving experience information is executable, and for example, the server side weights the evaluation of the driving experience information based on the determination result to update the evaluation. This makes it possible to improve the safety and comfort of traveling of the vehicle by reducing the number of distribution times of the driving experience information that is inappropriate for the traveling environment and the traveling condition of the vehicle. Further, the availability of the system can be improved by updating the driving experience information adaptably for changes in the traveling environment and the traveling condition of the vehicle and distributing the driving experience information to the vehicle.

### [Fifth Embodiment]

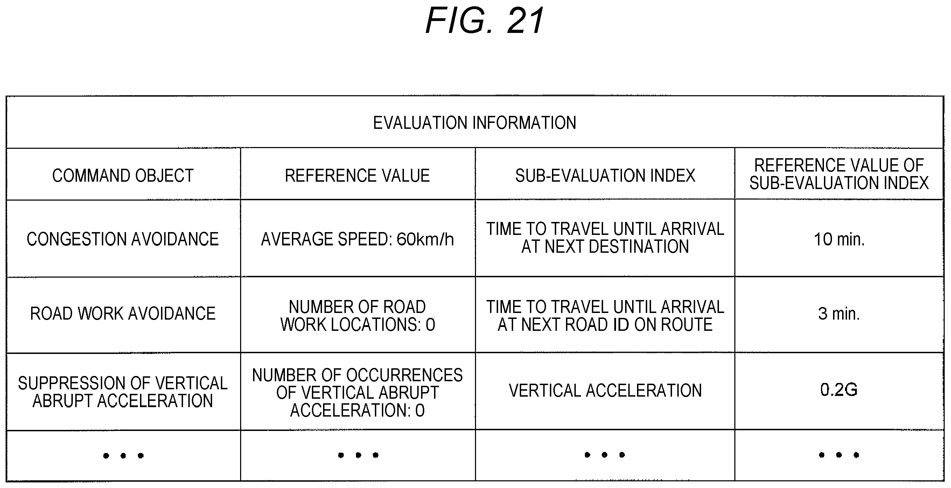

A fifth embodiment of the present invention will be described below with reference to FIGS. 21 to 22.

The characteristic in the present embodiment is that a determination is comprehensively made whether execution of the driving experience information is necessary (execution necessity) by adding a sub-evaluation index.

FIG. 21 is a diagram explaining an example of additional information of the driving experience information in the fifth embodiment.

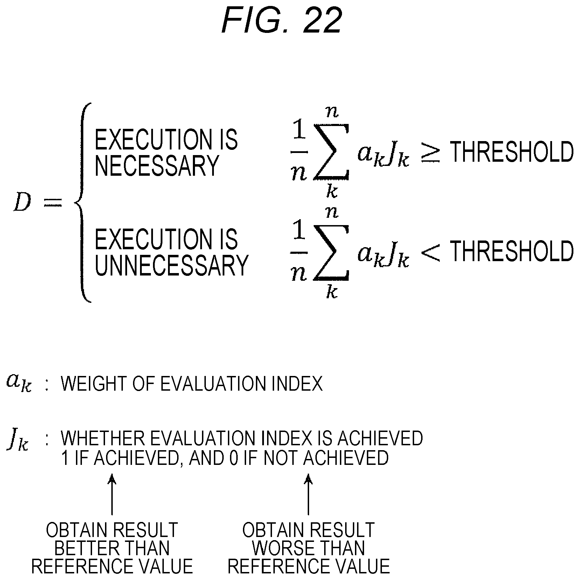

In comparison with the driving experience information in the second embodiment illustrated in FIG. 11, "sub-evaluation index" and "reference value of sub-evaluation index" are added as (e) "evaluation information" of the driving experience information. In the present embodiment, in a case of evaluating whether the execution of the driving experience information is necessary, the server 1 side analyzes driving data, monitors a traveling trajectory and a traveling state, and evaluates the driving experience information candidate distributed to the vehicle Ve as to whether "road situation" in (d) "execution condition" has been resolved or whether "command object" and "reference value" in (e) "evaluation information" have been achieved (or whether to exceed "reference value"). In a case where "command object" and "reference value" in (e) "evaluation information" are not achieved (or fall below "reference value"), an evaluation is made whether "sub-evaluation index" and "reference value of the sub-evaluation index" are achieved (or whether to exceed "reference value of the sub-evaluation index") for each vehicle Ve (for example, for the entire vehicles Ve). Then, an average value of the weights of the sub-evaluation indexes determined for the vehicles is calculated using the determination expression illustrated in FIG. 22. In a case where the average value is larger than or equal to a predetermined threshold, the evaluation is made that the execution of the driving experience information is necessary. In a case where the average value is smaller than the predetermined threshold, the evaluation is made that the execution of the driving experience information is unnecessary. As a result, a determination can be made whether the execution of the comprehensive driving experience information is necessary (execution necessity). In other words, the driving experience information evaluation unit 118 adds the sub-evaluation index related to vehicle control to the feedback information described above, and evaluates whether the execution of the driving experience information is necessary (execution necessity).

Note that other sub-evaluation indexes include the number of braking times, jerk, the number of times own vehicle pulls in front of another vehicle, the number of times another vehicle pulls in front of own vehicle, and an average speed. Further, a plurality of sub-evaluation indexes may be set. In a case where the plurality of sub-evaluation indexes is present, weighting may be performed in accordance with the importance level. In addition, the command object and its reference value may be included in the sub-evaluation indexes.

According to the present embodiment, for example, the vehicle side determines whether the distributed driving experience information has been executed, whether the execution of the distributed driving experience information is necessary (execution necessity), and whether the distributed driving experience information is executable, and for example, the server side weights the evaluation of the driving experience information based on the determination result to update the evaluation. Further, a determination can be made whether the execution of the comprehensive driving experience information is necessary by adding the sub-evaluation index. This makes it possible to improve the safety and comfort of traveling of the vehicle by reducing the number of distribution times of the driving experience information that is inappropriate for the traveling environment and the traveling condition of the vehicle. Further, the availability of the system can be improved by updating the driving experience information adaptably for changes in the traveling environment and the traveling condition of the vehicle and distributing the driving experience information to the vehicle.

Note that, the above embodiment illustrates the case where the server 1 side makes an evaluation whether the driving experience information has been executed, whether the execution thereof is necessary, and whether the driving experience information is executable. However, the evaluation does not have to be made only on the server 1 side, and may be made on the vehicle Ve side. The evaluation of the execution necessity needs information about another vehicle in some cases. In this case, the evaluation might be difficult on the vehicle Ve side, but the evaluation can be made on the vehicle Ve side in a case where information about a vehicle is not necessary (whether road work exists or the like). That is, there are the following cases including a case where the processing on the server 1 side is executed on the vehicle Ve side.
(1) The execution result is transmitted from the vehicle Ve side to the server 1. On the server 1 side, the driving experience information evaluation unit 118 makes a determination as to execution or non-execution, execution necessity, and executability, and the driving experience information evaluation value updating unit 119 updates the driving experience information (the above-described first to fourth embodiments).
(2) On the vehicle Ve side, the driving experience information evaluation unit 118 makes a determination as to execution or non-execution, execution necessity, and executability, and transmits the results to the server 1. On the server 1 side, the driving experience information evaluation value updating unit 119 updates the driving experience information.
(3) On the vehicle Ve side, the driving experience information evaluation unit 118 makes a determination as to execution or non-execution, execution necessity. Further, the driving experience information evaluation value updating unit 119 updates the driving experience information on the vehicle Ve side. The update information is transmitted to the server 1.

### [Summary of First to Fifth Embodiments]

As described above, the information processing device of the present embodiment includes the driving experience information storage unit (the driving experience information database 133) that stores driving experience information for determining a driving action of a vehicle, the driving experience information extraction unit 116 that extracts driving experience information corresponding to each section on a traveling route of the vehicle, the information acquisition unit (the driving experience information execution result acquisition unit 113 or the external environment data acquisition unit 112) that acquires feedback information including an execution result of the driving experience information, the feedback information being transmitted from the vehicle after the vehicle has traveled in the section, the driving experience information evaluation unit 118 that evaluates whether the driving experience information has been executed or whether execution of the driving experience information is necessary (execution necessity), based on the feedback information, and the driving experience information evaluation value updating unit 119 that updates an evaluation value indicating an importance level of the driving experience information, based on an evaluation result of the driving experience information evaluation unit 118 (the first and second embodiments) .

The feedback information further includes external information about the vehicle in the section, the external information being associated with the driving experience information, and control information about the vehicle (the second embodiment).

The driving experience information evaluation unit 118 evaluates whether the driving experience information has been executed, based on the feedback information, and the driving experience information evaluation value updating unit 119 increases the evaluation value when the driving experience information has been executed, and decreases the evaluation value when the driving experience information has not been executed (the first embodiment).

Further, the driving experience information evaluation unit 118 evaluates whether the execution of the driving experience information is necessary, based on the feedback information, and the driving experience information evaluation value updating unit 119 increases the evaluation value when the execution of the driving experience information is necessary, and decreases the evaluation value when the execution of the driving experience information is unnecessary (the second embodiment).

The driving experience information evaluation unit 118 further evaluates whether the driving experience information has been executed, based on the feedback information, and evaluates whether the execution of the driving experience information is necessary when the driving experience information has been executed, and the driving experience information evaluation value updating unit 119 increases the evaluation value when the execution of the driving experience information is necessary, and decreases the evaluation value when the driving experience information has not been executed or the execution of the driving experience information is unnecessary (the third embodiment).

The driving experience information evaluation value updating unit 119 invalidates or deletes the driving experience information when the evaluation value is smaller than or equal to a predetermined threshold.

The driving experience information evaluation unit 118 evaluates whether the driving experience information has been executed, based on the feedback information, and evaluates whether the driving experience information is executable when the driving experience information has not been executed, and the driving experience information evaluation value updating unit updates the evaluation value of the driving experience information in accordance with a result of evaluating whether the driving experience information is executable (the fourth embodiment).

The driving experience information evaluation unit 118 evaluates whether a driving action equivalent to the driving experience information (command) has been executed when the driving experience information is executable, and the driving experience information evaluation value updating unit 119 does not change the evaluation value or decreases the evaluation value when the driving experience information is inexecutable, does not change the evaluation value when the driving action equivalent to the driving experience information (command) has been executed, and decreases the evaluation value when the driving action equivalent to the driving experience information (command) has not been executed (the fourth embodiment).

The driving experience information evaluation unit 118 evaluates whether the driving experience information has been executed, based on the feedback information, evaluates whether the execution of the driving experience information is necessary when the driving experience information has been executed, evaluates whether the driving experience information is executable when the driving experience information has not been executed, and evaluates whether a driving action equivalent to the driving experience information (command) has been executed when the driving experience information is executable, and in which the driving experience information evaluation value updating unit 119 increases the evaluation value when execution of the driving experience information is necessary, decreases the evaluation value when the execution of the driving experience information is unnecessary, does not change the evaluation value or decreases the evaluation value when the driving experience information is inexecutable, does not change the evaluation value when the driving action equivalent to the driving experience information (command) has been executed, and decreases the evaluation value when the driving action equivalent to the driving experience information (command) has not been executed (the fourth embodiment) .

The driving experience information evaluation value updating unit 119 determines whether the evaluation value is smaller than or equal to a predetermined threshold (only) when the evaluation value is changed, and invalidates or deletes the driving experience information when the evaluation value is smaller than or equal to the predetermined threshold (the fourth embodiment).

The driving experience information storage unit (the driving experience information database 133) stores control information (command), an execution condition, and the evaluation value of the driving experience information in association with one another (the first embodiment and the like) .

The driving experience information evaluation unit 118 adds an evaluation index (sub-evaluation index) regarding vehicle control to the feedback information to evaluate whether the execution of the driving experience information is necessary (the fifth embodiment).

The information processing device further includes the driving experience information distribution unit 117 that distributes a plurality of pieces of driving experience information having different traveling conditions in the section to the vehicle, and enables a vehicle side to select driving experience information to be executed in accordance with external information about the vehicle from the plurality of pieces of driving experience information (the first embodiment and the like).

Further, a driving assistance system of the present embodiment includes the information processing device and a vehicle, and assists vehicle driving by executing the driving experience information stored in the driving experience information storage unit (the driving experience information database 133) on the vehicle side.

An information processing method of the present embodiment includes storing driving experience information for determining a driving action of a vehicle, extracting driving experience information corresponding to each section on a traveling route of the vehicle, acquiring feedback information including an execution result of the driving experience information, the feedback information being transmitted (output from the vehicle after the vehicle has traveled in the section, evaluating whether the driving experience information has been executed or whether execution of the driving experience information is necessary (execution necessity), based on the feedback information, and updating an evaluation value indicating an importance level of the driving experience information, based on an evaluation result in the evaluation.

According to the present embodiment, for example, the vehicle side determines whether the distributed driving experience information has been executed or whether execution of the distributed driving experience information is necessary (execution necessity), and for example, the server side weights an evaluation of the driving experience information based on the determination result to update the evaluation. This makes it possible to improve the safety and comfort of traveling of the vehicle by reducing the number of distribution times of the driving experience information that is inappropriate for the traveling environment and the traveling condition of the vehicle. Further, the availability of the system can be improved by updating the driving experience information adaptably for changes in the traveling environment and the traveling condition of the vehicle and distributing the driving experience information to the vehicle.

Although the embodiments of the present invention have been described in detail above, the present invention is not limited to the above embodiments, and various design changes can be made without departing from the spirit of the present invention described in the claims. For example, the above-described embodiments have been described in detail for easy understanding of the present invention, and the present invention is not necessarily limited to an invention having all the described configurations. A part of the configuration in one embodiment can be replaced with the configuration in another embodiment, and the configuration in another embodiment can be added to the configuration in one embodiment. Furthermore, another configuration can be added to and deleted from a part of the configuration in each embodiment, and this part of the configuration can be replaced with another configuration.

### Reference Signs List

1 server
100 communication device
110 data arithmetic device
111 driving data acquisition unit
112 external environment data acquisition unit (information acquisition unit)
113 driving experience information execution result acquisition unit (information acquisition unit)
114 event extraction unit
115 road information extraction unit
116 driving experience information extraction unit
117 driving experience information distribution unit
118 driving experience information evaluation unit
119 driving experience information evaluation value updating unit
120 map system
130 storage device
131 map data
132 data for analysis
133 driving experience information database (driving experience information storage unit)
2 vehicle control device
200 in-vehicle wireless communication device
210 external sensor
220 internal sensor
230 navigation system
240 HMI device
250 cognitive determination device
251 recognition unit
252 driving action planning unit
253 trajectory planning unit
254 driving experience information
255 driving experience information search unit
260 vehicle motion control device
270 steering control device
280 accelerator control device
290 brake control device
Ve vehicle

## Claims

1. An information processing device comprising:
a driving experience information storage unit that stores driving experience information for determining a driving action of a vehicle;
a driving experience information extraction unit that extracts driving experience information corresponding to each section on a traveling route of the vehicle;
an information acquisition unit that acquires feedback information including an execution result of the driving experience information, the feedback information being transmitted from the vehicle after the vehicle has traveled in the section;
a driving experience information evaluation unit that evaluates whether the driving experience information has been executed or whether execution of the driving experience information is necessary, based on the feedback information; and
a driving experience information evaluation value updating unit that updates an evaluation value indicating an importance level of the driving experience information, based on an evaluation result of the driving experience information evaluation unit.

2. The information processing device according to claim 1, wherein the feedback information further includes external information about the vehicle in the section, the external information being associated with the driving experience information, and control information about the vehicle.

3. The information processing device according to claim 1, wherein
the driving experience information evaluation unit evaluates whether the driving experience information has been executed, based on the feedback information, and
the driving experience information evaluation value updating unit
increases the evaluation value when the driving experience information has been executed, and
decreases the evaluation value when the driving experience information has not been executed.

4. The information processing device according to claim 1, wherein
the driving experience information evaluation unit evaluates whether the execution of the driving experience information is necessary, based on the feedback information, and
the driving experience information evaluation value updating unit
increases the evaluation value when the execution of the driving experience information is necessary, and
decreases the evaluation value when the execution of the driving experience information is unnecessary.

5. The information processing device according to claim 1, wherein
the driving experience information evaluation unit evaluates whether the driving experience information has been executed, based on the feedback information, and evaluates whether the execution of the driving experience information is necessary when the driving experience information has been executed, and
the driving experience information evaluation value updating unit
increases the evaluation value when the execution of the driving experience information is necessary, and
decreases the evaluation value when the driving experience information has not been executed or the execution of the driving experience information is unnecessary.

6. The information processing device according to claim 1, wherein the driving experience information evaluation value updating unit invalidates or deletes the driving experience information when the evaluation value is smaller than or equal to a predetermined threshold.

7. The information processing device according to claim 1, wherein
the driving experience information evaluation unit evaluates whether the driving experience information has been executed, based on the feedback information, and evaluates whether the driving experience information is executable when the driving experience information has not been executed, and
the driving experience information evaluation value updating unit updates the evaluation value of the driving experience information in accordance with a result of evaluating whether the driving experience information is executable.

8. The information processing device according to claim 7, wherein
the driving experience information evaluation unit evaluates whether a driving action equivalent to the driving experience information has been executed when the driving experience information is executable, and
the driving experience information evaluation value updating unit
does not change the evaluation value or decreases the evaluation value when the driving experience information is inexecutable,
does not change the evaluation value when the driving action equivalent to the driving experience information has been executed, and
decreases the evaluation value when the driving action equivalent to the driving experience information has not been executed.

9. The information processing device according to claim 1, wherein
the driving experience information evaluation unit evaluates whether the driving experience information has been executed, based on the feedback information, evaluates whether the execution of the driving experience information is necessary when the driving experience information has been executed, evaluates whether the driving experience information is executable when the driving experience information has not been executed, and evaluates whether a driving action equivalent to the driving experience information has been executed when the driving experience information is executable, and
the driving experience information evaluation value updating unit
increases the evaluation value when the execution of the driving experience information is necessary,
decreases the evaluation value when the execution of the driving experience information is unnecessary,
does not change the evaluation value or decreases the evaluation value when the driving experience information is inexecutable,
does not change the evaluation value when the driving action equivalent to the driving experience information has been executed, and
decreases the evaluation value when the driving action equivalent to the driving experience information has not been executed.

10. The information processing device according to claim 1, wherein the driving experience information evaluation value updating unit determines whether the evaluation value is smaller than or equal to a predetermined threshold when the evaluation value is changed, and invalidates or deletes the driving experience information when the evaluation value is smaller than or equal to the predetermined threshold.

11. The information processing device according to claim 1, wherein the driving experience information storage unit stores control information, an execution condition, and the evaluation value of the driving experience information in association with one another.

12. The information processing device according to claim 1, wherein the driving experience information evaluation unit adds an evaluation index regarding vehicle control to the feedback information to evaluate whether the execution of the driving experience information is necessary.

13. The information processing device according to claim 1, further comprising a driving experience information distribution unit that distributes a plurality of pieces of driving experience information having different traveling conditions in the section to the vehicle, and enables a vehicle side to select driving experience information to be executed in accordance with external information about the vehicle from the plurality of pieces of driving experience information.

14. A driving assistance system comprising:
the information processing device according to claim 1; and
a vehicle,
wherein the driving experience information stored in the driving experience information storage unit is executed on a vehicle side to assist vehicle driving.

15. An information processing method comprising:
storing driving experience information for determining a driving action of a vehicle;
extracting driving experience information corresponding to each section on a traveling route of the vehicle;
acquiring feedback information including an execution result of the driving experience information, the feedback information being transmitted from the vehicle after the vehicle has traveled in the section;
evaluating whether the driving experience information has been executed or whether execution of the driving experience information is necessary, based on the feedback information; and
updating an evaluation value indicating an importance level of the driving experience information, based on an evaluation result in the evaluation.
